# EUROPEAN PATENT APPLICATION

(11) **EP 4 607 834 A1**
(43) Date of publication of application: **27.08.2025**
(21) Application number: 22962338.4
(22) Date of filing: 18.10.2022
(51) Int. Cl.: H04L 5/00, H04W 76/28, H04W 52/02

(54) **METHOD AND APPARATUS FOR TRANSMITTING INDICATION INFORMATION, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Gunzelmann, Rainer
(86) International application number: PCT/CN2022/126006
(87) International publication number: WO 2024/082147

(57) **Abstract**

The present disclosure provides a method and apparatus for transmitting indication information, and a readable storage medium. The method comprises: sending first indication information to a user equipment, wherein the first indication information is used for indicating a wake-up delay of switching the user equipment from a sleep state to an operating state. According to the method of the present disclosure, by means of issued first indication information, a network device indicates a wake-up delay that needs to be satisfied in a wake-up process to a user equipment. Therefore, the network device and the user equipment can perform data transmission on the basis of the same wake-up delay, thereby ensuring that the user equipment can completely receive data while saving the energy consumption of the user equipment is saved.

## Description

### TECHNICAL FIELD

The disclosure relates to the field of wireless communication technologies, in particular to a method for transmitting indication information, an apparatus for transmitting indication information and a readable storage medium.

### BACKGROUND

In a 3rd Generation Partnership Project (3GPP) Release 18 (R18), the usage of low power wake up signal (LP WUS) was proposed. In applications, a base station sends an LP WUS to a user equipment (UE) to wake up the UE. The UE can monitor and receive the LP WUS by a separate low-power receiver, and wakes up, after receiving the LP WUS, its main receiver to send and receive data. In related arts, during the wake-up process of the UE, there may be issues of missed downlink data or wasted energy consumption by the UE.

### SUMMARY

The disclosure provides a method for transmitting indication information, an apparatus for transmitting indication information and a readable storage medium.

According to a first aspect of the disclosure, a method for sending indication information is provided. The method is performed by a network device, and includes:
sending first indication information to a user equipment (UE), in which the first indication information is used to indicate a wake-up delay for the UE to switch from a sleep state to a working state.

In the method of the disclosure, the network device indicates to the UE the wake-up delay that needs to be satisfied during the wake-up process by sending the first indication information, so that the network device and the UE may perform data transmission based on the same wake-up delay, which is beneficial to ensure that the UE is able to receive data completely on the basis of saving energy of the UE.

In some possible implementations, sending the first indication information to the UE, includes:
sending a higher-layer signaling to the UE, in which the higher-layer signaling includes the first indication information.

In some possible implementations, sending the first indication information to the UE, includes:
sending downlink control information (DCI) to the UE, in which the DCI includes the first indication information.

In some possible implementations, the wake-up delay indicated by the DCI takes effect after a first duration since receiving the DCI by the UE.

In some possible implementations,
in a case of a wake-up delay indicated by an (N+1)^{th} DCI taking effect, a wake-up delay indicated by an N^{th} DCI becomes invalid.

In some possible implementations, the method further includes:
sending second indication information to the UE, in which the second indication information is used to indicate an effective duration of the wake-up delay corresponding to the DCI.

In some possible implementations, the DCI includes a first information field having M bits, and the first information field is used to indicate the wake-up delay.

In some possible implementations, the method further includes:
sending third indication information to the UE, in which the third indication information is used to indicate a default wake-up delay.

In some possible implementations, the method further includes:
receiving first auxiliary information sent by the UE, in which the first auxiliary information includes a wake-up delay that the UE expects.

In some possible implementations, the method further includes:
receiving second auxiliary information sent by the UE, in which the second auxiliary information includes a wake-up delay range that the UE supports.

In some possible implementations, the method further includes:
sending configuration information to the UE, in which the configuration information includes an indication of allowing the UE to monitor a low power wake-up signal (LP WUS).

According to a second aspect of the disclosure, a method for receiving indication information is provided. The method is performed by a UE, and includes:
receiving first indication information sent by a network device, in which the first indication information is used to indicate a wake-up delay for the UE to switch from a sleep state to a working state; and
in response to receiving a LP WUS, switching from the sleep state to the working state within the wake-up delay according to the first indication information.

In the method of the disclosure, the UE obtains the wake-up delay according to the first indication information sent by the network device. Therefore, when the UE is awakened, the UE needs to switch to the working state within the wake-up delay, so as to receive data completely on the basis of saving energy.

In some possible implementations, receiving the first indication information sent by the network device, includes:
receiving DCI sent by the network device, in which the DCI includes the first indication information.

In some possible implementations, switching from the sleep state to the working state within the wake-up delay according to the first indication information, includes:
determining the wake-up delay according to values of M bits in a first information field of the DCI; and
switching from the sleep state to the working state within the wake-up delay.

In some possible implementations, the method further includes:
determining a first moment after a first duration since receiving the DCI as a start moment for the wake-up delay indicated by the DCI to take effect.

In some possible implementations, the method further includes:
determining a start moment for a wake-up delay indicated by an (N+1)^{th} DCI to take effect as an end moment for a wake-up delay indicated by an N^{th} DCI to take effect.

In some possible implementations, the method further includes:
determining an end moment of the wake-up delay indicated by the DCI according to an effective duration.

In some possible implementations, the effective duration is defined by a protocol, or
the effective duration is determined according to second indication information sent by the network device, in which the second indication information is used to indicate the effective duration of the wake-up delay corresponding to the DCI.

In some possible implementations, the method further includes:
in a case of receiving a new LP WUS after the wake-up delay corresponding to the DCI becomes invalid, switching from the sleep state to the working state within a default wake-up delay.

In some possible implementations, the method further includes:
receiving third indication information sent by the network device, in which the third indication information is used for indicating the default wake-up delay.

In some possible implementations, the method further includes:
sending first auxiliary information to the network device, in which the first auxiliary information includes a wake-up delay that the UE expects.

In some possible implementations, the method further includes:
sending second auxiliary information to the network device, in which the second auxiliary information includes a wake-up delay range that the UE supports.

According to a third aspect of the disclosure, an apparatus for sending indication information is provided. The apparatus may be configured to perform the steps performed by the network device in the first aspect or any possible design of the first aspect. The network device may realize the functions in the above method through a hardware structure, a software module, or a combination of the hardware structure and the software module.

When the apparatus shown in the third aspect is realized by a software module, the apparatus may include a transceiver module to support the communication apparatus in communications.

When performing the steps described in the first aspect, the transceiver module is configured to: send the first indication information to the UE, in which the first indication information is used to indicate the wake-up delay for the UE to switch from the sleep state to the working state.

According to a fourth aspect of the disclosure, an apparatus for receiving indication information is provided. The apparatus may be configured to perform the steps performed by the UE in the second aspect or any possible design of the second aspect. The UE can realize the functions in the above method through a hardware structure, a software module, or a combination of the hardware structure and the software module.

When the apparatus shown in the fourth aspect is realized by a software module, the apparatus may include a transceiver module and a processing module that are coupled to each other. The transceiver module is configured to support the communication apparatus in communications, and the processing module is configured to support the communication apparatus to perform processing operations, e.g., generating information/messages to be sent or processing received signals to obtain information/messages.

When performing the steps described in the second aspect, the transceiver module is configured to: receive the first indication information sent by the network device, in which the first indication information is used to indicate the wake-up delay for the UE to switch from the sleep state to the working state.

The processing module is configured to, in response to receiving an LP WUS, switch from the sleep state to the working state within the wake-up delay according to the first indication information.

According to a fifth aspect of the disclosure, a communication apparatus is provided. The communication apparatus includes: a processor and a memory. The memory is configured to store a computer program, and the processor is configured to execute the computer program to realize the first aspect or any possible design of the first aspect.

According to a sixth aspect of the disclosure, a communication apparatus is provided. The communication apparatus includes: a processor and a memory. The memory is configured to store a computer program, and the processor is configured to execute the computer program to realize the second aspect or any possible design of the second aspect.

According to a seventh aspect of the disclosure, a computer-readable storage medium is provided. The computer-readable storage medium stores an instruction (which may also be called a computer program, or a program). When a computer calls and executes the instruction, the computer is caused to execute the above-mentioned first aspect or any possible design of the first aspect.

According to an eighth aspect of the disclosure, a computer-readable storage medium is provided. The computer-readable storage medium stores an instruction (which may also be called a computer program, or a program). When a computer calls and executes the instruction, the computer is caused to execute the above-mentioned second aspect or any possible design of the second aspect.

It is understood that the foregoing general description and the following detailed description are exemplary and explanatory only and do not limit the disclosure.

### BRIEF DESCRIPTION OF THE DRAWINGS

The accompanying drawings illustrated herein are used to provide a further understanding of embodiments of the disclosure and constitute a part of the application, and the schematic embodiments of the disclosure and illustrations thereof are used to explain the embodiments of the disclosure and do not constitute an undue limitation on the embodiments of the disclosure.

The accompanying drawings, which are incorporated in and constitute a part of this description, illustrate embodiments consistent with the disclosure and, together with the description, serve to explain principles of the embodiments of the disclosure.
FIG. 1 is a schematic diagram of a wireless communication system according to an embodiment of the disclosure.
FIG. 2 is a flowchart of a method for transmitting indication information according to an exemplary embodiment.
FIG. 3 is a flowchart of a method for sending indication information according to an exemplary embodiment.
FIG. 4 is a flowchart of another method for sending indication information according to an exemplary embodiment.
FIG. 5 is a schematic diagram of a time domain interval corresponding to a wake-up delay in first indication information according to an exemplary embodiment.
FIG. 6 is a flowchart of yet another method for sending indication information according to an exemplary embodiment.
FIG. 7 is a schematic diagram of a time domain interval corresponding to the wake-up delay in the first indication information according to another exemplary embodiment.
FIG. 8 is a flowchart of a method for receiving indication information according to an exemplary embodiment.
FIG. 9 is a flowchart of another method for receiving indication information according to an exemplary embodiment.
FIG. 10 is a block diagram of an apparatus for sending indication information according to an exemplary embodiment.
FIG. 11 is a block diagram of a communication apparatus according to an exemplary embodiment.
FIG. 12 is a block diagram of an apparatus for receiving indication information according to an exemplary embodiment.
FIG. 13 is a block diagram of a UE according to an exemplary embodiment.

### DETAILED DESCRIPTION

Embodiments of the disclosure are further described in combination with the accompanying drawings and specific implementations.

Exemplary embodiments will be described in detail herein, examples of which are illustrated in drawings. The following description refers to the accompanying drawings in which the same numbers in different drawings represent the same or similar elements unless otherwise represented. The implementations described in the following exemplary embodiments do not represent all implementations consistent with the embodiments of the disclosure. Instead, they are merely examples of apparatuses and methods consistent with aspects related to the disclosure as recited in the attached claims.

The terms used in the embodiments of the disclosure are only for the purpose of describing specific embodiments, and are not intended to limit the embodiments of the disclosure. The singular forms of "a", "the" and "this" used in the embodiments of the disclosure and the attached claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in the embodiments of the disclosure to describe various types of information, such information should not be limited by these terms. These terms are only used to distinguish the same type of information from each other. For example, without departing from the scope of the embodiments of the disclosure, first information may also be referred to as second information, and similarly, second information may also be referred to as first information. Depending on the context, the term "if" as used herein may be interpreted as "when", "while" or "in response to determining".

The embodiments of the disclosure are described in detail below, and examples of which are illustrated in the accompanying drawings, in which the same or similar symbols indicate the same or similar elements. The embodiments described below with reference to the accompanying drawings are examples and are intended to be used to explain the disclosure and are not to be construed as limiting the disclosure.

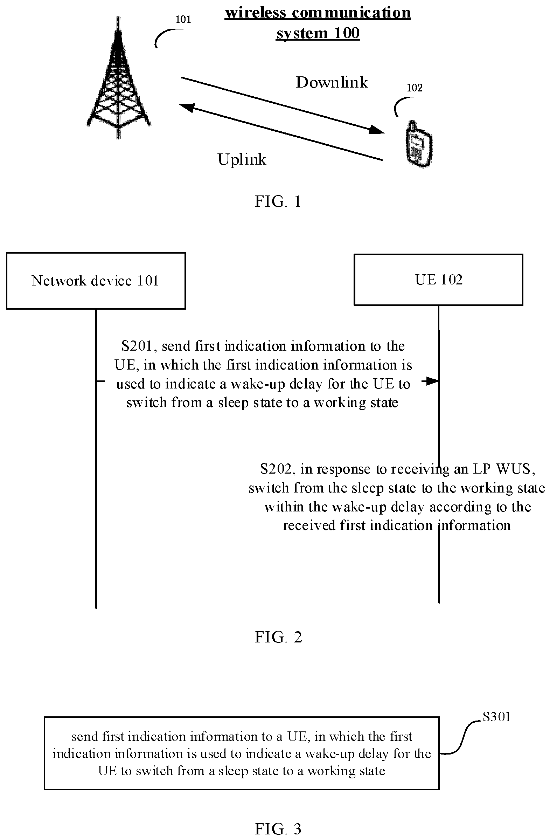

As illustrated in FIG. 1, a method for sending indication information according to an embodiment of the disclosure may be applied to a wireless communication system 100. The wireless communication system 100 may include: a network device 101 and a user equipment (UE) 102. The UE 102 is configured to support carrier aggregation and is able to be connected to a plurality of carrier units of the network device 101, including one primary carrier unit and one or more secondary carrier units.

It should be understood that the above wireless communication system 100 may be applied to both low-frequency scenarios and high-frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future 5th-Generation (5G) system, a new radio (NR) communication system or a future evolved public land mobile network (PLMN) system, etc.

The UE 102 may be a terminal, an access terminal, a terminal unit, a terminal station, a mobile station (MS), a distant station, a remote terminal, a mobile terminal, a wireless communication device, a terminal agent, or a terminal device. The UE 102 may have a wireless transceiver function and is capable of communicating (e.g., wirelessly communicating) with one or more network devices in one or more communication systems and accepting network services provided by the network devices. The network devices mentioned herein include, but are not limited to, the network device 101 shown in the figure.

The UE 102 may be a cellular phone, a cordless phone, a session initiation protocol (SIP) phone, a wireless local loop (WLL) station, a personal digital assistant (PDA), a handheld device having a wireless communication function, a computing device or other processing devices connected to a wireless modem, a vehicle-mounted device, a wearable device, a terminal device in a future 5G network or a terminal device in a future evolved PLMN network, etc.

The network device 101 may be an access network device (which is also called an access network site). The access network device refers to a device that provides a network access function, such as a radio access network (RAN) base station. The network device 101 may include a base station (BS), or include the BS and a radio resource management device for controlling the BS. The network device 101 may further include a relay station (relay device), an access point (AP), a BS in the future 5G network, a BS in the future evolved PLMN network, or a NR BS. The network device 101 may be a wearable device, a vehicle-mounted device, or a communication chip with a communication module.

For example, the network device 101 includes, but is not limited to, a next generation BS (gNB, which is short for gnodeB) in 5G, an evolved node B (eNB) in an LTE system, a radio network controller (RNC), a node B (NB) in a wideband code division multiple access (WCDMA) system, a radio controller in a CRAN system, a BS controller (BSC), a base transceiver station (BTS) in a global system for mobile communications (GSM) system or a code division multiple access (CDMA) system, a home BS (HNB, which is short for home evolved node B or home node B), a baseband unit (BBU), a transmitting and receiving point (TRP), a transmitting point (TP), or a mobile switching center.

In a scenario where there is no data transmission or reception, for example, in a scenario where the UE 102 does not receive a low power wake up signal (LP WUS), in order to save energy, the UE 102 may be in different levels of sleep states. For example, in a downlink reception scenario, when a time interval between two adjacent downlink data packets is relatively long (hundreds of milliseconds), the UE 102 may be in a deeper sleep state. When a time interval between two adjacent downlink data packets is relatively short (a fewer milliseconds), the UE 102 may be in a lighter sleep state.

When the UE 102 receives the LP WUS, wake-up delays required for the UE 102 to wake up from different levels of sleep states to a working state may be different. The deeper the sleep state, the longer the wake-up delay required.

In related arts, since the UE 102 does not know a delay or arrival characteristics of a downlink service, the UE chooses the sleep state according to its own situation. The network device 101 is unaware of the sleep state of the UE 102, nor does know the wake-up delay of the UE 102, and the network device 101 sends downlink data according to its own needs. Therefore, the UE 102 may miss the downlink data, or there may be a waste of the UE's energy.

On the one hand, after the network device 101 sends the LP WUS, the network device 101 may have already sent downlink data before the UE 102 switching to the working state. In this case, the UE 102 may thus miss the downlink data. On the other hand, after the network device 101 sends the LP WUS and the UE 102 has already switched to the working state, the network device 101 fails to send the downlink data. In this case, the energy of the UE 102 may be wasted.

An embodiment of the disclosure provides a method for transmitting indication information. As illustrated in FIG. 2, FIG. 2 is a method for transmitting indication information according to an exemplary embodiment. As illustrated in FIG. 2, the method includes steps S201-S202.

At step S201, the network device 101 sends first indication information to the UE 102, in which the first indication information is used to indicate a wake-up delay for the UE 102 to switch from a sleep state to a working state.

At step S202, in a case of receiving an LP WUS, the UE 102 switches from the sleep state to the working state within the wake-up delay according to the received first indication information.

In some possible implementations, the network device 101 may also send the LP WUS. The LP WUS and the first indication information may be sent in various sequences. For example, the network device 101 may send the LP WUS in step S201 or before step S201. Alternatively, the network device 101 sends the LP WUS between steps S201 and S202.

In some possible implementations, the network device 101 sends a higher-layer signaling, which includes the first indication information. For example, the network device 101 sends the first indication information via a radio resource control (RRC) signaling.

In some possible implementations, the network device 101 sends downlink control information (DCI), which carries the first indication information.

In some possible implementations, the UE 102 switches from the sleep state to the working state, i.e., a main receiver of the UE 102 switches from a sleep state to a working state.

In some possible implementations, the wake-up delay indicated by the first indication information may be a maximum wake-up delay. At an end moment of the maximum wake-up delay, the UE 102 is in a wake-up state, i.e., the working state, so as to wait for receiving the downlink data.

In some possible implementations, the wake-up delay for the main receiver of the UE 102 to switch from the sleep state to the working state shall not exceed the maximum wake-up delay indicated by the first indication information. Before the end moment of the maximum wake-up delay, the UE 102 may start a wake-up process immediately in a case of receiving the LP WUS or start the wake-up process after a period of time since receiving the LP WUS. The UE only needs to ensure that it has been awaken at the end moment.

In some possible implementations, before receiving the LP WUS, the UE 102 may be in different levels of sleep states. For example, the sleep states may be classified in descending order of levels as: deep sleep, light sleep and micro sleep. The wake-up delays for different sleep states are different, so the sleep states may be classified in descending order of lengths of wake-up delays as: deep sleep, light sleep and micro sleep.

In some possible implementations, when receiving the LP WUS, the UE 102 may determine an appropriate sleep state according to the wake-up delay indicated by the first indication information, and wakes up and switches, in combination with its current sleep state, to the working state within the wake-up delay indicated by the first indication information.

In some possible implementations, the network device 101 sends downlink data after the wake-up delay indicated by the first indication information.

In the embodiment of the disclosure, the network device 101 indicates, by sending the first indication information, to the UE 102 the wake-up delay that needs to be satisfied during the wake-up process, so that the network device 101 and the UE 102 may perform data transmission based on the same wake-up delay, which is beneficial to ensure that the UE 102 is able to receive data completely on the basis of saving the energy of the UE 102.

An embodiment of the disclosure provides a method for sending indication information. The method is performed by the network device 101. As illustrated in FIG. 3, FIG. 3 is a method for sending indication information according to an exemplary embodiment. As illustrated in FIG. 3, the method includes step S301.

At step S301, the network device 101 sends first indication information to the UE 102, in which the first indication information is used to indicate a wake-up delay for the UE 102 to switch from a sleep state to a working state.

In some possible implementations, the network device 101 may further send an LP WUS. The LP WUS and the first indication information may be sent in various sequences. For example, the network device 101 may send the LP WUS while sending the first indication information. Alternatively, the network device 101 sends the LP WUS before or after sending the first indication information.

In some possible implementations, the UE 102 switches from the sleep state to the working state, i.e., a main receiver of the UE 102 switches from a sleep state to a working state.

In some possible implementations, the wake-up delay indicated by the first indication information may be a maximum wake-up delay. At an end moment of the maximum wake-up delay, the UE 102 is in a wake-up state, i.e., the working state.

In some possible implementations, the wake-up delay for the main receiver of the UE 102 to switch from the sleep state to the working state shall not exceed the maximum wake-up delay indicated by the first indication information.

In some possible implementations, after step S301, the method further includes: the network device 101 sending downlink data after the wake-up delay indicated by the first indication information, i.e., sending the downlink data after an end moment of the wake-up delay. In this embodiment, the UE 102 switches to the wake-up state at the latest by the end moment of the indicated wake-up delay, and starts to receive the downlink data after being awaken.

In some possible implementations, the UE 102 is in a RRC-connected state.

The method disclosed in the disclosure may be applied to a scenario where the network device 101 configures connected discontinuous reception (C-DRX) for the UE 102, for example, during an On-duration of the C-DRX.

Alternatively, the method of the disclosure may be applied to a scenario where the network device 101 does not configure the C-DRX. In this scenario, the UE 102 has no time domain configuration during On-duration and Off-duration. After receiving the first indication information, the UE 102 determines an appropriate sleep state in combination with the wake-up delay indicated by the first indication information.

In the embodiment of the disclosure, the network device 101 indicates, by sending the first indication information, to the UE 102 the wake-up delay that needs to be satisfied during the wake-up process, so that the network device 101 and the UE 102 may perform data transmission based on the same wake-up delay, which is beneficial to ensure that the UE 102 is able to receive data completely on the basis of saving the energy of the UE 102.

An embodiment of the disclosure provides a method for sending indication information. The method is performed by the network device 101, and includes step S301'.

At step S301', the network device 101 sends a higher-layer signaling to the UE 102, in which the higher-layer signaling includes the first indication information.

In some possible implementations, the network device 101 sends the first indication information through an RRC signaling.

In some possible implementations, the wake-up delay indicated by the first indication information is a maximum wake-up delay. At an end moment of the maximum wake-up delay, the UE 102 is in a wake-up state, i.e., the working state.

In the embodiment of the disclosure, the network device 101 configures the wake-up delay for the UE 102 through the higher-layer signaling, so that the network device 101 and the UE 102 may perform data transmission based on the same wake-up delay.

An embodiment of the disclosure provides a method for sending indication information. The method is performed by the network device 101, and includes step S301".

At step S301", the network device 101 sends DCI to the UE 102, in which the DCI includes the first indication information.

In some possible implementations, the DCI includes a first information field having M bits, and the first information field is used to indicate the wake-up delay.

In some possible implementations, the first information field is used to indicate a maximum wake-up delay.

In some possible implementations, M is, for example, 2. The wake-up delay is indicated by 2 bits in the first information field.

In an example, when the 2 bits are "00", the corresponding indicated wake-up delay is a first candidate wake-up delay. When the two bits are "01", the corresponding indicated wake-up delay is a second candidate wake-up delay. When the 2 bits are "10", the corresponding indicated wake-up delay is a third candidate wake-up delay. When the 2 bits are "11", the corresponding indicated wake-up delay is a fourth candidate wake-up delay.

In some possible implementations, correspondence relationships between the values of the 2 bits in the first information field and the four candidate wake-up delays may be defined by a protocol, or configured by the network device 101 for the UE 102.

In an example, the network device 101 sends a higher-layer signaling to the UE 102 to indicate the correspondence relationships.

In this example, the UE 102 receives the higher-layer signaling, and determines, according to the correspondence relationships indicated by the signaling and the bit values of the first information field of the received DCI, the candidate wake-up delay corresponding to the bit values. The corresponding candidate wake-up delay is the wake-up delay indicated by the network device 101 through the DCI, such as the maximum wake-up delay.

In the embodiment of the disclosure, the network device 101 configures the wake-up delay for the UE 102 through the DCI, so that the network device 101 and the UE 102 may perform the data transmission based on the same wake-up delay.

The embodiment of the disclosure provides the method for sending indication information. The method is performed by the network device 101, and includes step S301".

At step S301", the network device 101 sends DCI to the UE 102, in which the DCI includes the first indication information.

The wake-up delay indicated by the DCI takes effect after a first duration since receiving the DCI by the UE.

In some possible implementations, the wake-up delay indicated by the DCI may be a maximum wake-up delay.

In some possible implementations, the first duration may include a processing time by the UE 102 for the received DCI.

In an example, a moment when the UE 102 receives the DCI is t1, and a start moment of the wake-up delay carried in the DCI is a moment t2, which is after the first duration T1 since t1, i.e. t2= T1+t1.

In some possible embodiments, within the first duration, i.e., before the wake-up delay indicated by the DCI takes effect, the network device 101 will not send any new DCI that indicates a wake-up delay, so as to prevent the network device 101 from changing the wake-up delay too frequently.

The embodiment of the disclosure indicates the way to determine the start moment of the wake-up delay, and the way to determine the end moment of the wake-up delay may be described in the following embodiment.

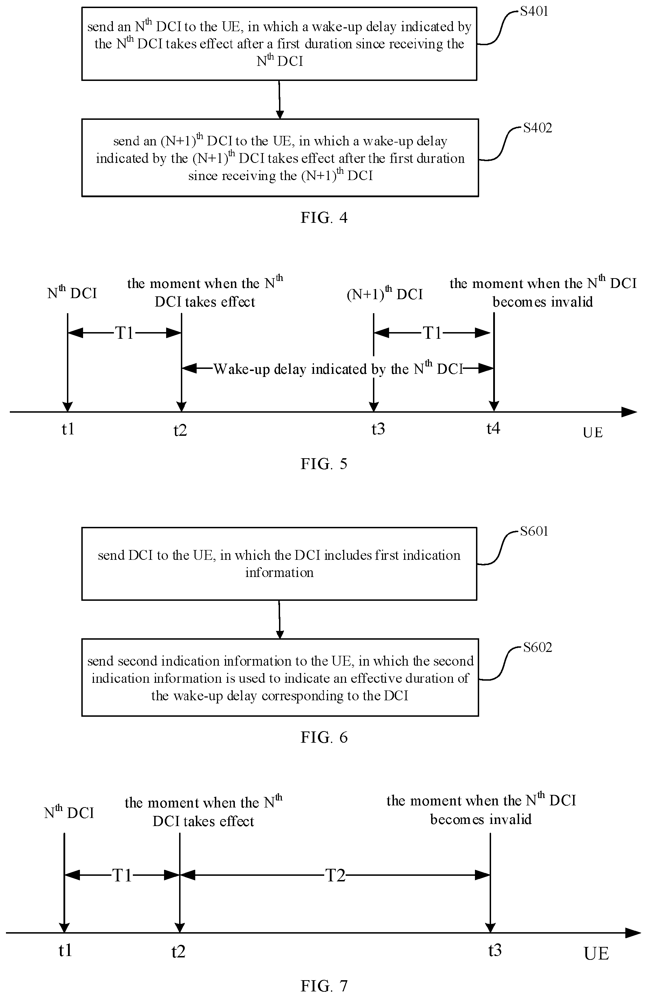

An embodiment of the disclosure provides a method for sending indication information, which is performed by the network device 101. As illustrated in FIG. 4, FIG. 4 is a method for sending indication information according to an exemplary embodiment. As illustrated in FIG. 4, the method includes steps S401-S402.

At step S401, the network device 101 sends an N^{th} DCI to the UE 102, in which a wake-up delay indicated by the N^{th} DCI takes effect after a first duration since receiving the N^{th} DCI by the UE 102.

At step S402, the network device 101 sends an (N+1)^{th} DCI to the UE 102, in which a wake-up delay indicated by the (N+1)^{th} DCI takes effect after the first duration since receiving the (N+1)^{th} DCI by the UE 102.

When the wake-up delay indicated by the (N+1)^{th} DCI takes effect, the wake-up delay indicated by the N^{th} DCI becomes invalid.

In some possible implementations, the wake-up delay indicated by the DCI is a maximum wake-up delay.

In some possible implementations, in a case where the network device 101 does not send the (N+1)^{th} DCI, or the UE 102 does not receive the (N+1)^{th} DCI, the wake-up delay indicated by the (N+1)^{th} DCI may always be effective.

In some possible implementations, when the UE 102 receives the (N+1)^{th} DCI and the wake-up delay indicated by the (N+1)^{th} DCI takes effect, the wake-up delay indicated by the N^{th} DCI becomes invalid.

In an example, in combination with the example of FIG. 5, a moment when the UE 102 receives the N^{th} DCI is t1, and a start moment of the wake-up delay carried in the N^{th} DCI taking effect is a moment t2, which is after the first duration T1 since t1, i.e. t2= T1+t1. A moment when the UE 102 receives the (N+1)^{th} DCI is t3, and a start moment of the wake-up delay carried in the (N+1)^{th} DCI taking effect is a moment t4, which is after the first duration T1 since t3, i.e. t4= T1+t3.

In this example, at the moment t4, the wake-up delay corresponding to the N^{th} DCI becomes invalid. That is, in a case where the UE receives a wake-up signal at or after t4, the wake-up delay during the wake-up process of the UE shall satisfy the wake-up delay indicated in the (N+1)^{th} DCI, that is, the wake-up delay of the UE during the wake-up process after t4 shall not exceed the wake-up delay indicated in the (N+1)^{th} DCI.

In the embodiment of the disclosure, a moment when the wake-up delay indicated by the N^{th} DCI becomes invalid is determined by the (N+1)^{th} DCI. In this way, the UE 102 may always perform the wake-up based on the wake-up delay indicated by the latest DCI, so as to maintain the same understanding of the wake-up delay as the network device 101.

An embodiment of the disclosure provides a method for sending indication information, which is performed by the network device 101. As illustrated in FIG. 6, FIG. 6 is a method for sending indication information according to an exemplary embodiment. As illustrated in FIG. 6, the method includes steps S601-S602.

At step S601, the network device 101 sends DCI to the UE 102, in which the DCI includes first indication information, and a wake-up delay indicated by the DCI takes effect after a first duration since receiving the DCI by the UE.

At step S602, the network device 101 sends second indication information to the UE 102, in which the second indication information is used to indicate an effective duration of the wake-up delay corresponding to the DCI.

In the embodiment, the sequence of steps S601 and S602 is only for illustration. For example, the DCI and the second indication information may also be sent at the same time, or step S602 may be executed before step S601.

In an example, as illustrated in FIG. 7, a moment when the UE 102 receives the DCI is t1, a start moment of the wake-up delay carried in the DCI is a moment t2, which is after the first duration T1 since t1, i.e. t2= T1+t1, and an end moment of the wake-up delay is a moment t3, which is after the effective duration T2 since t2, i.e. t3= T2+t2.

In some possible implementations, the wake-up delay indicated by the DCI is a maximum wake-up delay.

In the embodiment of the disclosure, a moment when the wake-up delay indicated by the N^{th} DCI becomes invalid is determined via the effective duration.

An embodiment of the disclosure provides a method for sending indication information, which is performed by the network device 101. The method includes the steps S301 - S302.

At step S301, the network device 101 sends the first indication information to the UE 102, in which the first indication information is used to indicate the wake-up delay for the UE 102 to switch from the sleep state to the working state.

At step S302, the network device 101 sends third indication information to the UE 102, in which the third indication information is used to indicate a default wake-up delay.

In the embodiment, the sequence of steps S301 and S302 is only for illustration. In other implementations, steps S301 and S302 may be executed simultaneously, or step S302 may be executed first.

The embodiment of the disclosure may be applied to a scenario where, when the wake-up delay indicated by the first indication information becomes invalid, the network device 101 has not sent any new first indication information or the UE 102 has not received any new first indication information.

In some possible implementations, the default wake-up delay may be defined by a protocol.

In some possible implementations, the default wake-up delay may be one of the four candidate wake-up delays, or may be configured additionally in addition to the four candidate wake-up delays.

In some possible implementations, the network device 101 sends the first indication information through a higher-layer signaling.

In some possible implementations, the network device 101 sends the first indication information through DCI.

In some possible implementations, the wake-up delay indicated by the DCI takes effect after a first duration since receiving the DCI by the UE 102.

In some possible implementations, the network device 101 may also send the second indication information to the UE 102, and the second indication information is used to indicate an effective duration T2 of the wake-up delay corresponding to the DCI.

In some possible implementations, in a wake-up scenario after T2, the network device 101 and the UE 102 will apply the default wake-up delay.

In an example, in a first wake-up scenario shown in FIG. 7, the network device 101 sends a first LP WUS and indicates a wake-up delay through the DCI. A moment when the UE 102 receives the DCI is t1, a start moment of the wake-up delay carried in the DCI is a moment t2, which is after the first duration T1 since t1, i.e. t2= T1+t1, and an end moment of the wake-up delay is a moment t3, which is after the effective duration T2 since t2, i.e. t3= T2+t2.

In the example, after T2, that is, at or after the moment t3, in a case where it is necessary to wake up the UE 102 for the second time, the network device 101 and the UE 102 perform data transmission based on the default wake-up delay. That is, the wake-up delay of the second wake-up of the UE 102 does not exceed the default wake-up delay. The network device 101 sends downlink data after the default wake-up delay.

In the embodiment of the disclosure, when the wake-up delay indicated by the first indication information become invalid, the default wake-up delay will be applied in the subsequent wake-up scenario to ensure that the network device 101 and the UE 102 still have the same understanding of the wake-up delay in the subsequent wake-up scenario.

An embodiment of the disclosure provides a method for sending indication information, which is performed by the network device 101. The method includes the steps S301 - S302. In the process of executing step S302, step S302 may include the following steps.

At step S302-1, the network device 101 receives first auxiliary information sent by the UE 102, in which the first auxiliary information includes a wake-up delay that the UE 102 expects.

At step S302-2, the network device 101 determines third indication information according to the first auxiliary information.

At step S302-3, the network device 101 sends the third indication information to the UE 102, in which the third indication information is used to indicate a default wake-up delay.

In some possible implementations, the network device 101 sends the first indication information through a higher-layer signaling.

In some possible implementations, the network device 101 sends the first indication information through DCI.

In some possible implementations, the wake-up delay indicated by the DCI takes effect after a first duration since receiving the DCI by the UE.

In the embodiment of the disclosure, the network device 101 obtains the wake-up delay that the UE 102 expects according to the first auxiliary information sent by the UE 102, and the network device 101 may configure the default wake-up delay with reference to this wake-up delay.

An embodiment of the disclosure provides a method for sending indication information, which is performed by the network device 101. The method includes steps S300-1, S300-2 and S301.

At step S300-1, the network device 101 receives second auxiliary information sent by the UE 102, in which the second auxiliary information includes a wake-up delay range that the UE 102 supports.

At step S300-2, the network device 101 determines first indication information according to the second auxiliary information.

At step S301, the network device 101 sends the first indication information to the UE 102, in which the first indication information is used to indicate the wake-up delay for the UE 102 to switch from the sleep state to the working state.

In some possible implementations, the wake-up delay range reported by the UE 102 includes the shortest wake-up delay and the longest wake-up delay that the UE 102 supports.

In some possible implementations, the wake-up delay determined by the network device 101 according to the second auxiliary information may be the maximum wake-up delay, may be shorter than the shortest wake-up delay, or may be within the wake-up delay range, or may be no shorter than the longest wake-up delay.

In an example, the wake-up delay range is [T3, T4]. The shortest wake-up delay supported by the UE 102 is T3. For example, when the UE 102 is in the lightest sleep state, the wake-up delay of the UE 102 is T3. The longest wake-up delay supported by the UE 102 is T4. For example, when the UE 102 is in the deepest sleep state, the wake-up delay of the UE 102 is T4.

When determining the wake-up delay, the network device 101 may refer to the wake-up delay range. For example, the wake-up delay is configured as T4, or the wake-up delay is between T3 and T4, and the determined or configured wake-up delay is indicated by the first indication information.

The following description takes a case where the wake-up delay configured by the network device 101 is the maximum wake-up delay as an example.

In a case where the maximum wake-up delay configured by the network device 101 is shorter than T3, the UE 102 needs to stay in the working state all the time without sleeping.

In a case where the maximum wake-up delay configured by the network device 101 is longer than T4, the UE 102 may be in a relatively deeper sleep state.

In the embodiment of the disclosure, the network device 101 may obtain the wake-up delay range supported by the UE 102 according to the second auxiliary information reported by the UE 102, and configures the wake-up delay with reference to the wake-up delay range.

An embodiment of the disclosure provides a method for sending indication information, which is performed by the network device 101. The method includes steps S301 and S303.

At step S301, the network device 101 sends the first indication information to the UE 102, in which the first indication information is used to indicate the wake-up delay for the UE 102 to switch from the sleep state to the working state.

At step S303, the network device 101 sends configuration information to the UE 102, in which the configuration information includes an indication for allowing the UE 102 to monitor an LP WUS.

In the embodiment, the sequence of steps S301 and S303 is only for illustration. In an wake-up scenario, step S303 may be executed first and then step S301 is executed.

In some possible implementations, the configuration information may also include a time-frequency resource configuration of the LP WUS, so that the UE 102 may accurately monitor and receive the LP WUS based on the configuration information.

In the embodiment of the disclosure, the network device 101 configures the indication for allowing the UE 102 to monitor the LP WUS, and the UE 102 may monitor the LP WUS according to this configuration, so that the network device 101 may wake up the UE 102 by sending the LP WUS.

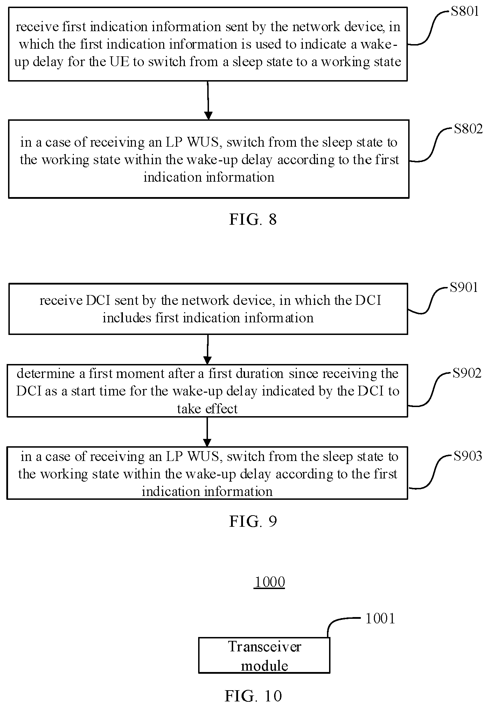

An embodiment of the disclosure provide a method for receiving indication information, which is performed by the UE 102. As illustrated in FIG. 8, FIG. 8 is a method for receiving indication information according to an exemplary embodiment. As illustrated in FIG. 8, the method includes steps S801-S802.

At step S801, the UE 102 receives first indication information sent by the network device 101, in which the first indication information is used to indicate a wake-up delay for the UE 102 to switch from a sleep state to a working state.

At step S802, in a case of receiving an LP WUS, the UE 102 switches from the sleep state to the working state within the wake-up delay according to the first indication information.

In some possible implementations, the UE 102 switches from the sleep state to the working state, i.e., a main receiver of the UE 102 switches from a sleep state to a working state.

In some possible implementations, the wake-up delay indicated by the first indication information may be a maximum wake-up delay. That is, the wake-up delay for the main receiver of the UE 102 to switch from the sleep state to the working state shall not exceed the maximum wake-up delay indicated by the first indication information. At an end moment of the maximum wake-up delay, the UE 102 should be in a wake-up state, i.e., the working state.

In some possible implementations, before receiving the LP WUS, the UE 102 may be in different levels of sleep states. For example, the sleep states may be classified in descending order of levels as: deep sleep, light sleep and micro sleep. The wake-up delays for different sleep states are different, so the sleep states may be classified in descending order of lengths of wake-up delays as: deep sleep, light sleep and micro sleep.

In some possible implementations, when receiving the LP WUS, the UE 102 may determine an appropriate sleep state according to the wake-up delay indicated by the first indication information, and wakes up and switches, in combination with its current sleep state, to the working state within the wake-up delay indicated by the first indication information.

The following description still takes the case where the wake-up delay configured by the network device 101 is the maximum wake-up delay as an example.

In an example, when the UE 102 is in a deep sleep state, the wake-up delay required is relatively long, for example, 20ms. In a case where the network device 101 sends the first indication information and the LP WUS simultaneously, and the maximum wake-up delay indicated by the first indication information is equal to 20ms, the UE 102 may perform the wake-up immediately after receiving the LP WUS and switches from the deep sleep state to the working state within the maximum wake-up delay.

In an example, when the UE 102 is in a light sleep state, the wake-up delay required is relatively shorter, and is shorter than the maximum wake-up delay. In a case where the network device 101 sends the first indication information and the LP WUS simultaneously, the UE 102 may perform the wake-up after a period of time after receiving the LP WUS. Alternatively, the UE 102 may switch to the micro sleep state after receiving the LP WUS, stays in the micro sleep state for a period of time, and then perform the wake up, and switches to the working state within the maximum wake-up delay. In this way, it may not only save the energy consumption but also switch the UE 102 to the working state within the maximum wake-up delay.

In an example, when the UE 102 is in the micro sleep state, the wake-up delay required is shortest, and is shorter than the maximum wake-up delay. In this case, the UE 102 may stay in the micro sleep state for a period of time after receiving the LP WUS and then perform the wake-up, and switch to the working state within the maximum wake-up delay. In this way, it may not only save the energy consumption but also switch the UE 102 from the micro sleep state to the working state within the maximum wake-up delay.

In some possible implementations, the network device 101 sends downlink data after the wake-up delay, for example, sending the downlink data after the end moment of the maximum wake-up delay. After switching to the working state, the UE 102 starts to monitor and receive the downlink data.

In some possible implementations, the network device 101 may configure the UE 102 to be allowed to monitor the LP WUS. For example, the UE 102 receives configuration information sent by the network device 101, in which the configuration information includes an indication for allowing the UE to monitor the LP WUS, and the UE102 may monitor the LP WUS based on this configuration.

In some possible implementations, the configuration information may also include a time-frequency resource configuration of the LP WUS, so that the UE 102 may accurately monitor and receive the LP WUS based on the configuration information.

In the embodiment of the disclosure, the UE 102 obtains the wake-up delay according to the first indication information sent by the network device 101. Therefore, when the UE 102 is woken up, the UE 102 needs to switch to the working state within the wake-up delay, so as to receive data completely on the basis of saving energy.

An embodiment of the disclosure provides a method for receiving indication information, which is performed by the UE 102. The method includes steps S801'-S802.

At step S801', the UE 102 receives DCI sent by the network device 101, in which the DCI includes first indication information, and the first indication information is used to indicate a wake-up delay for the UE 102 to switch from a sleep state to a working state.

At step S802, in a case of receiving the LP WUS, the UE 102 switches from the sleep state to the working state within the wake-up delay according to the first indication information.

In some possible implementations, the DCI includes a first information field having M bits, and the first information field is used to indicate the wake-up delay. For example, the first information field is used to indicate a maximum wake-up delay.

In some possible implementations, the UE 102 does not expect to receive new DCI indicating a wake-up delay within a first duration, i.e., before the wake-up delay indicated by the DCI takes effect, and the network device 101 will not send any new DCI indicating a wake-up delay, so as to prevent the network device 101 from changing the wake-up delay too frequently.

In some possible implementations, in a case where the network device 101 still sends new DCI indicating a wake-up delay within the first duration, i.e., before the wake-up delay indicated by the DCI takes effect, and the UE 102 receives the new DCI, the UE 102 may ignore the new DCI and still obtain the wake-up delay according to the DCI in step S801'.

In some possible implementations, step S802 may include the following step S802'.

At step S802', in a case of receiving the LP WUS, the UE 102 determines the wake-up delay according to values of M bits in a first information field of the DCI, and switches from the sleep state to the working state within the wake-up delay.

In some possible implementations, different values of M bits correspond to different candidate wake-up delays, thus the corresponding wake-up delays are different.

In some possible implementations, M is, for example, 2. Correspondence relationship between the values of 2 bits in the first information field and the four candidate wake - up delays may be defined by a protocol or configured by the network device 101 for the UE 102.

In some possible implementations, before step S802', the UE 102 may receive a higher-layer signaling sent by the network device 101 that indicates the correspondence relationships. The UE 102 determines, according to the correspondence relationships indicated by the signaling and the bit values of the first information field of the received DCI, the candidate wake-up delay corresponding to the bit values.

In an example, when the 2 bits are "00", the corresponding indicated wake-up delay is a first candidate wake-up delay. When the two bits are "01", the corresponding indicated wake-up delay is a second candidate wake-up delay. When the 2 bits are "10", the corresponding indicated wake-up delay is a third candidate wake-up delay. When the 2 bits are "11", the corresponding indicated wake-up delay is a fourth candidate wake-up delay.

In the embodiment, the UE 102 obtains the wake-up delay configured by the network device 101 according to the DCI sent by the network device 101.

An embodiment of the disclosure provides a method for receiving indication information, which is performed by the UE 102. As illustrated in FIG. 9, FIG. 9 is a method for receiving indication information according to an exemplary embodiment. As illustrated in FIG. 9, the method includes steps S901-S903.

At step S901, the UE 102 receives DCI sent by the network device 101, in which the DCI includes first indication information, and the first indication information is used to indicate a wake-up delay for the UE 102 to switch from a sleep state to a working state.

At step S902, the UE 102 determines a first moment after a first duration since receiving the DCI as a start moment for the wake-up delay indicated by the DCI to take effect.

At step S903, in a case of receiving an LP WUS, the UE 102 switches from the sleep state to the working state within the wake-up delay according to the first indication information.

In some possible implementations, the wake-up delay indicated by the DCI is a maximum wake-up delay.

In some possible implementations, the first duration may include a processing time by the UE 102 for the received DCI.

In an example, a moment when the UE 102 receives the DCI is t1, and the start moment of the wake-up delay carried in the DCI is a moment t2, which is after the first duration T1 since t1, i.e. t2= T1+t1.

In the embodiment of the disclosure, the UE 102 also needs to determine an end moment of the wake-up delay taking effect. Therefore, the UE 102 needs to switch to the working state at the end moment of the wake-up delay taking effect.

In some possible implementations, the UE 102 determines the end moment of the wake-up delay indicated by an N^{th} DCI via the following step S902-1.

At step S902-1, a start moment for a wake-up delay indicated by an (N+1)^{th} DCI to take effect is determined as an end moment for a wake-up delay indicated by an N^{th} DCI to take effect.

Step S902-1 is executed after step S902.

In this implementation, the UE 102 may receive the N^{th} DCI and the (N+1)^{th} DCI respectively in step S902, and determines, according to the moment when the DCI is received, the start moment of the wake-up delay indicated by the N^{th} DCI and the start moment of the wake-up delay indicated by the (N+1)^{th} DCI respectively.

In some possible implementations, in a case where the network device 101 does not send the (N+1)^{th} DCI, or the UE102 does not receive the (N+1)^{th} DCI, the wake-up delay indicated by the N^{th} DCI may always be effective.

In some possible implementations, when the UE 102 receives the (N+1)^{th} DCI and the wake-up delay indicated by the (N+1)^{th} DCI takes effect, the wake-up delay indicated by the N^{th} DCI becomes invalid.

In an example, in combination with the example of FIG. 5, the moment when the UE 102 receives the N^{th} DCI is t1, and the start moment of the wake-up delay carried in the N^{th} DCI is the moment t2, which is after the first duration T1 since t1, i.e. t2= T1+t1. The moment when the UE 102 receives the (N+1)^{th} DCI is t3, and the start moment of the wake-up delay carried in the (N+1)^{th} DCI is the moment t4, which is after the first duration T1 since t3, i.e. t4= T1+t3.

In this example, at the moment t4, the wake-up delay corresponding to the N^{th} DCI becomes valid. That is, in a case where the UE receives a wake-up signal at or after t4, the wake-up delay during the wake-up process of the UE shall satisfy the wake-up delay indicated in the (N+1)^{th} DCI, that is, the wake-up delay of the UE during the wake-up process after t4 shall not exceed the wake-up delay indicated in the (N+1)^{th} DCI.

In some possible implementations, the UE 102 determines the end moment of the wake-up delay indicated by the N^{th} DCI via the following step S902-2.

At step S902-2, the UE 102 determines an end moment of the wake-up delay indicated by the DCI according to an effective duration.

In some possible implementations, the effective duration is defined by a protocol.

In some possible embodiments, the effective duration is configured by the network device 101.

In an example, the UE 102 determines the effective duration according to the second indication information sent by the network device 101. The second indication information is used to indicate the effective duration of the wake-up delay corresponding to the DCI.

In an example, in combination with the example of FIG. 7, the moment of the UE 102 receiving the DCI is t1, and the start moment of the wake-up delay carried in the DCI is a moment t2, which is after the first duration T1 since t1, i.e. t2= T1+t1, and the end moment of the wake-up delay is a moment t3, which is after the effective duration T2 since t2, i.e. t3= T2+t2.

In the embodiment of the disclosure, according to the received DCI, the UE 102 may respectively determine the start moment and the end moment of the wake-up delay corresponding to the DCI taking effect, and wake up within the wake-up delay, so as to switch to the working state.

An embodiment of the disclosure provide a method for receiving indication information, which is performed by the UE 102. The method includes steps S901-S904.

At step S901, the UE 102 receives DCI sent by the network device 101, in which the DCI includes first indication information, and the first indication information is used to indicate a wake-up delay for the UE 102 to switch from a sleep state to a working state.

At step S902, the UE 102 determines a first moment after a first duration since receiving the DCI as a start moment for the wake-up delay indicated by the DCI to take effect.

At step S902-2, the UE 102 determines an end moment of the wake-up delay indicated by the DCI according to an effective duration.

At step S903, in a case of receiving an LP WUS, the UE 102 switches from the sleep state to the working state within the wake-up delay according to the first indication information.

At step S904, in a case where a new LP WUS is received after the wake-up delay corresponding to DCI becomes invalid, the UE 102 switches from the sleep state to the working state within a default wake-up delay.

In some possible implementations, the default wake-up delay may be defined by a protocol.

In some possible implementations, the default wake-up delay is configured by the network device 101.

In an example, the UE 102 obtains the default wake-up delay configured by the network device 101 through the following step S904-1. At step S904-1, the UE 102 receives third indication information sent by the network device 101, in which the third indication information is used to indicate the default wake-up delay.

In an example, the default wake-up delay may be one of the first candidate wake-up delay, the second candidate wake-up delay, the third candidate wake-up delay and the fourth candidate wake-up delay, or the default wake-up delay may be additionally configured in addition to the four candidate wake-up delays.

In some possible implementations, in a wake-up scenario after T2, the network device 101 and the UE 102 will apply the default wake-up delay. The following example is still referred to.

In an example, in the first wake-up scenario shown in FIG. 7, the network device 101 sends the first LP WUS and indicates the wake-up delay through the DCI. The moment when the UE 102 receives the DCI is t1, the start moment of the wake-up delay carried in the DCI is a moment t2, which is after the first duration T1 since t1, i.e. t2= T1+t1, and the end moment of the wake-up delay is a moment t3, which is after the effective duration T2 since t2, i.e. t3= T2+t2.

In the example, after T2, that is, at or after the moment t3, in a case where it is necessary to wake up the UE 102 for the second time, the network device 101 and the UE 102 perform data transmission based on the default wake-up delay. That is, the wake-up delay of the second wake-up of the UE 102 does not exceed the default wake-up delay. The network device 101 sends downlink data after the default wake-up delay.

In the embodiment of the disclosure, when the wake-up delay indicated by the first indication information become invalid, the default wake-up delay will be applied in the subsequent wake-up scenario to ensure that the network device 101 and the UE 102 still have the same understanding of the wake-up delay in the subsequent wake-up scenario.

An embodiment of the disclosure provides a method for receiving indication information, which is performed by the UE 102. In addition to the steps S801-S802, the method further includes: the following S800-1.

At step S800-1, the UE 102 sends first auxiliary information to the network device 101, in which the first auxiliary information includes a wake-up delay that the UE 102 expects.

The method may further include steps S901-S903, or steps S901-S904.

In the embodiment of the disclosure, the first auxiliary information reported by the UE 102 may be used for the network device 101 to configure the default wake-up delay.

An embodiment of the disclosure provide a method for receiving indication information, which is performed by the UE 102. In addition to the steps S801-S802, the method further includes: the following step S800-2.

At step S800-2, the UE 102 sends second auxiliary information to the network device 101, in which the second auxiliary information includes a wake-up delay range that the UE 102 supports.

The method may further include steps S901-S903, or steps S901-S904.

In some possible implementations, the wake-up delay range reported by the UE 102 includes the shortest wake-up delay and the longest wake-up delay that the UE supports.

In an example, the wake-up delay range is [T3, T4]. The shortest wake-up delay supported by the UE 102 is T3. For example, when the UE 102 is in the lightest sleep state, the wake-up delay of the UE 102 is T3. The longest wake-up delay supported by the UE 102 is T4, for example, when the UE 102 is in the deepest sleep state, the wake-up delay of the UE 102 is T4.

When determining the wake-up delay, the network device 101 may refer to the wake-up delay range. For example, the network device 101 configures the wake-up delay as T4, or the wake-up delay is between T3 and T4, and indicates the determined or configured wake-up delay by the first indication information.

The following description takes a case where the wake-up delay configured by the network device 101 is the maximum wake-up delay as an example.

In a case where the maximum wake-up delay configured by the network device 101 is shorter than T3, the UE 102 needs to stay in the working state all the time without sleeping.

In a case where the maximum wake-up delay configured by the network device 101 is longer than T4, the UE 102 may be in a relatively deeper sleep state.

In the embodiment of the disclosure, the UE 102 may report the second auxiliary information to report the wake-up delay range supported by itself, so that the network device 101 may configure the wake-up delay with reference to the wake-up delay range.

Based on the same concept as the above method embodiments, the embodiment of the disclosure also provides an apparatus for sending indication information. The apparatus may have the functions of the network device 101 in the above method embodiments, and is configured for executing the steps performed by the network device 101 in the above method embodiments. The function may be realized by a hardware, by software or by the hardware executing the corresponding software. The hardware or the software includes one or more modules corresponding to the above functions.

In a possible implementation, an apparatus 1000 shown in FIG. 10 may be acted as the network device 101 involved in the above method embodiments, and performs the steps performed by the network device 101 in the above method embodiments. As shown in FIG. 10, the apparatus 1000 may include a transceiver module 1001. The transceiver module 1001 may be configured to support the communication apparatus to communicate, and may have wireless communication functions, e.g., wireless communication with other communication apparatuses through a wireless radio interface.

When performing the steps implemented by the network device 101, the transceiver module 1001 is configured to: send first indication information to a UE, in which the first indication information is used to indicate a wake-up delay for the UE to switch from a sleep state to a working state.

In some possible implementations, the transceiver module 1001 is further configured to: send a higher-layer signaling to the UE, in which the higher-layer signaling includes the first indication information.

In some possible implementations, the transceiver module 1001 is further configured to: send DCI to the UE, in which the DCI includes the first indication information.

In some possible implementations, the wake-up delay indicated by the DCI takes effect after a first duration since receiving the DCI by the UE.

In some possible implementations, when a wake-up delay indicated by an (N+1)^{th} DCI takes effect, a wake-up delay indicated by the N^{th} DCI becomes invalid.

In some possible implementations, the transceiver module 1001 is further configured to: send second indication information to the UE, in which the second indication information is used to indicate an effective duration of the wake-up delay corresponding to the DCI.

In some possible implementations, the DCI includes a first information field having M bits, and the first information field is used to indicate the wake-up delay.

In some possible implementations, the transceiver module 1001 is further configured to: send third indication information to the UE, in which the third indication information is used to indicate a default wake-up delay.

In some possible implementations, the transceiver module 1001 is further configured to: receive first auxiliary information sent by the UE, in which the first auxiliary information includes a wake-up delay that the UE expects.

In some possible implementations, the transceiver module 1001 is further configured to: receive second auxiliary information sent by the UE, in which the second auxiliary information includes a wake-up delay range that the UE supports.

In some possible implementations, the transceiver module 1001 is further configured to: send configuration information to the UE, in which the configuration information includes an indication for allowing the UE to monitor an LP WUS.

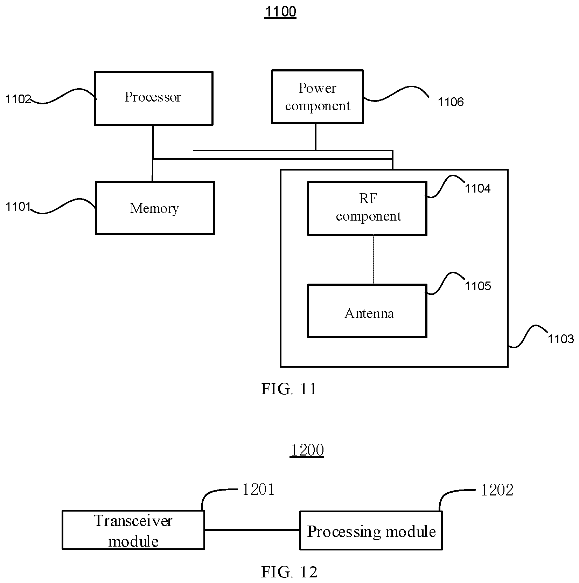

When the communication apparatus is the network device 101, its structure may be illustrated in FIG. 11. The structure of communication apparatus is explained by taking a BS as an example. As illustrated in FIG. 11, the apparatus 1100 includes a memory 1101, a processor 1102, a transceiver component 1103, and a power component 1106. The memory 1101 is coupled with the processor 1102 and may be configured to store programs and data necessary for the communication apparatus 1100 to implement various functions. The processor 1102 is configured to support the communication apparatus 1100 to perform corresponding functions of the above method, and the functions may be implemented by calling the programs stored in the memory 1101. The transceiver component 1103 may be a wireless transceiver, which may be configured to support the communication apparatus 1100 to receive and send signaling and/or data through a wireless radio interface. The transceiver component 1103 may also be called a transceiver unit or a communication unit. The transceiver component 1103 may include a radio frequency (RF) component 1104 and one or more antennas 1105. The RF component 1104 may be a remote radio unit (RRU), which is configured for transmitting RF signals and converting RF signals and baseband signals. The one or more antennas 1105 are configured for radiating and receiving RF signals.

When the communication apparatus 1100 needs to send data, the processor 1102 may perform baseband processing on the data to be sent, and transmit baseband signals to the RRU. The RRU performs RF processing on the baseband signals and sends the RF signals in the form of electromagnetic waves through the antenna. When data is sent to the communication apparatus 1100, the RRU receives the RF signals through the antenna, converts the RF signals into the baseband signals, and sends the baseband signals to the processor 1102. The processor 1102 converts the baseband signals into data and processes the data.

Based on the same concept as the above method embodiments, the embodiment of the disclosure also provides an apparatus for receiving indication information. The apparatus may have the functions of the UE 102 in the above method embodiments, and is configured for executing the steps performed by the UE 102 in the above method embodiments. The function may be realized by a hardware, by software or by the hardware executing the corresponding software. The hardware or software includes one or more modules corresponding to the above functions.

In a possible implementation, the apparatus 1200 shown in FIG. 12 is acted as the UE 102 involved in the above method embodiments, and performs the steps performed by the UE 102 in the above method embodiments. As illustrated in FIG. 12, the apparatus 1200 includes a transceiver module 1201 and a processing module 1202 that are coupled to each other. The transceiver module 1201 is configured to support the communication apparatus to communicate, and may have wireless communication functions, e.g., wireless communication with other communication apparatuses through a wireless radio interface. The processing module 1202 is configured, by the communication apparatus, to perform processing operations, e.g., generating information/messages to be sent, or processing received signals to obtain information/messages.

When executing the steps performed by the UE 102, the transceiver module 1201 is configured to: receive first indication information sent by a network device, in which the first indication information is used to indicate a wake-up delay for the UE to switch from a sleep state to a working state.

The processing module 1202 is configured to: in a case of receiving an LP WUS, switch from the sleep state to the working state within the wake-up delay according to the first indication information.

In some possible implementations, the transceiver module 1201 is further configured to: receive DCI sent by the network device, in which the DCI includes the first indication information.

In some possible implementations, the processing module 1202 is further configured to: determine the wake-up delay according to values of M bits in a first information field of the DCI, and switch from the sleep state to the working state within the wake-up delay.

In some possible implementations, the processing module 1202 is further configured to: determine a first moment after a first duration since receiving the DCI as a start moment for the wake-up delay indicated by the DCI to take effect.

In some possible implementations, the processing module 1202 is further configured to: determine a start moment for a wake-up delay indicated by an (N+1)^{th} DCI to take effect as an end moment for a wake-up delay indicated by an N^{th} DCI to take effect.

In some possible implementations, the processing module 1202 is further configured to: determine an end moment of the wake-up delay indicated by the DCI according to an effective duration.

In some possible implementations, the effective duration is defined by a protocol, or
the effective duration is determined according to second indication information of the network device, in which the second indication information is used to indicate an effective duration of the wake-up delay corresponding to the DCI.

In some possible implementations, the processing module 1202 is further configured to: in a case of receiving a new LP WUS after the wake-up delay corresponding to the DCI expires, switch from the sleep state to the working state within a default wake-up delay.

In some possible implementations, the processing module 1202 is further configured to: receive third indication information sent by the network device, in which the third indication information is used to indicate the default wake-up delay.

In some possible implementations, the processing module 1202 is further configured to: send first auxiliary information to the network device, in which the first auxiliary information includes a wake-up delay that the UE expects.

In some possible implementations, the processing module 1202 is further configured to: send second auxiliary information to the network device, in which the second auxiliary information includes a wake-up delay range that the UE supports.

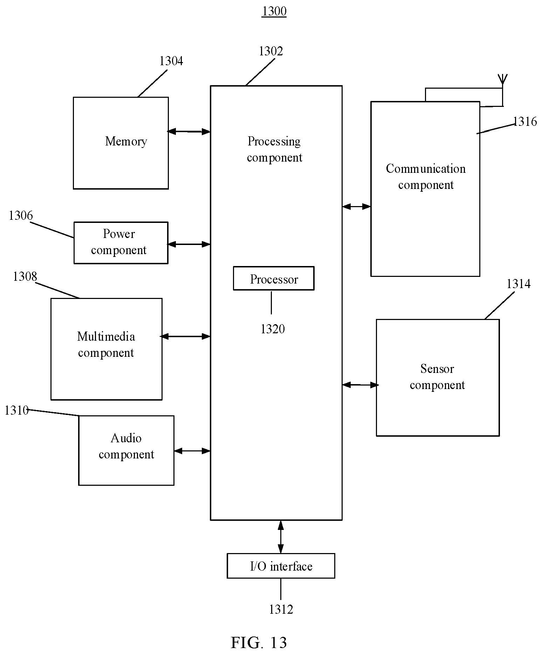

In a case where the apparatus for receiving indication information is the UE 102, its structure may also be illustrated in FIG. 13. The apparatus 1300 may be, for example, a mobile phone, a computer, a digital broadcasting terminal, a message transceiver device, a game console, a tablet device, a medical device, a fitness device and a PDA, etc.

As illustrated in FIG. 10, the apparatus 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the apparatus 1300, such as the operations associated with display, telephone calls, data communication, camera operations, and recording operations. The processing component 1302 may include one or more processors 1320 that are configured to perform instructions to implement all or part of the steps in the above method. Moreover, the processing component 1302 may include one or more modules which facilitate the processing component 1302 to interact with other components. For example, the processing component 1302 may include a multimedia module to facilitate the processing component 1302 to interact with the multimedia component 1308.

The memory 1304 is configured to store various types of data to support the operation of the apparatus 1300. Examples of such data include instructions for any applications or methods operated on the apparatus 1300, contact data, phonebook data, messages, pictures, videos, etc. The memory 1304 may be implemented using any type of volatile or non-volatile storage devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 1306 provides power to various components of the apparatus 1300. The power component 1306 may include a power management system, one or more power sources, and any other components associated with the generation, management, and distribution of power in the apparatus 1300.

The multimedia component 1308 includes a screen providing an output interface between the apparatus 1300 and a user. In some embodiments, the screen may include a Liquid Crystal Display (LCD) and a Touch Panel (TP). If the screen includes the TP, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front-facing camera and/or a rear-facing camera. When the apparatus 1300 is in an operating mode, such as a shooting mode or a video mode, the front-facing camera and/or the rear-facing camera can receive external multimedia data. Each front-facing camera or rear-facing camera may be a fixed optical lens system or has focal length and optical zoom capability.

The audio component 1310 is configured to output and/or input audio signals. For example, the audio component 1310 includes a microphone (MIC) configured to receive an external audio signal when the apparatus 1300 is in an operation mode, such as a calling mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the apparatus 1300. For instance, the sensor component 1314 may detect an open/closed status of the apparatus 1300, relative positioning of components, e.g., the display and the keypad, of the apparatus 1300, a change in position of the apparatus 1300 or a component of the apparatus 1300, a presence or absence of a user contact with the apparatus 1300, an orientation or an acceleration/deceleration of the apparatus 1300, and a change in temperature of the apparatus 1300. The sensor component 1314 may include a proximity sensor configured to detect the presence of nearby objects without any physical contact. The sensor component 1314 may also include a light sensor, such as a Complementary Metal Oxide Semiconductor (CMOS) or Charge-Coupled Device (CCD) image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the apparatus 1300 and other devices. The apparatus 1300 can access a wireless network based on a communication standard, such as Wi-Fi, 2G, or 3G, or a combination thereof. In an exemplary embodiment, the communication component 1 316 receives a broadcast signal from an external broadcast management system via a broadcast channel or broadcast associated information. In an exemplary embodiment, the communication component 1316 further includes a Near Field Communication (NFC) module to facilitate short-range communication. For example, the NFC module may be implemented based on a radio-frequency identification (RFID) technology, an Infrared Data Association (IrDA) technology, an Ultra -Wide Band (UWB) technology, a Blue Tooth (BT) technology, and other technologies.

In an exemplary embodiment, the apparatus 1300 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In an exemplary embodiment, a non-transitory computer readable storage medium including instructions is provided, such as the memory 1304 including instructions which is executable by the processor 1320 of the apparatus 1300 to implement the above methods. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. This application is intended to cover any variations, uses, or adaptations of the embodiments of the disclosure following the general principles thereof and including such departures from the disclosure as come within known or customary practice in the art. It is intended that the specification and embodiments are considered as exemplary only, with a true scope and spirit of the disclosure being indicated by the following claims.

It will be appreciated that the disclosure is not limited to the exact construction that has been described above and illustrated in the accompanying drawings, and that various modifications and changes may be made without departing from the scope thereof. It is intended that the scope of the embodiments of the disclosure only be limited by the attached claims.

### INDUSTRIAL PRACTICALITY

In the embodiment of the disclosure, the network device indicates to the UE the wake-up delay that needs to be satisfied during the wake-up process by sending the first indication information, so that the network device and the UE may perform data transmission based on the same wake-up delay, which is beneficial to ensure that the UE is able to receive data completely on the basis of saving energy of the UE.

## Claims

1. A method for sending indication information, performed by a network device, comprising:
sending first indication information to a user equipment (UE), wherein the first indication information is used to indicate a wake-up delay for the UE to switch from a sleep state to a working state.

2. The method of claim 1, wherein sending the first indication information to the UE, comprises:
sending a higher-layer signaling to the UE, wherein the higher-layer signaling comprises the first indication information.

3. The method of claim 1, wherein sending the first indication information to the UE, comprises:
sending downlink control information (DCI) to the UE, wherein the DCI comprises the first indication information.

4. The method of claim 3, wherein the wake-up delay indicated by the DCI takes effect after a first duration since receiving the DCI by the UE.

5. The method of claim 4, wherein in a case of a wake-up delay indicated by an (N+1)^{th} DCI taking effect, a wake-up delay indicated by an N^{th} DCI becomes invalid.

6. The method of claim 4, further comprising:
sending second indication information to the UE, wherein the second indication information is used to indicate an effective duration of the wake-up delay corresponding to the DCI.

7. The method of any one of claims 3-6, wherein the DCI comprises a first information field having M bits, and the first information field is used to indicate the wake-up delay.

8. The method of any one of claims 1-6, further comprising:
sending third indication information to the UE, wherein the third indication information is used to indicate a default wake-up delay.

9. The method of claim 8, further comprising:
receiving first auxiliary information sent by the UE, wherein the first auxiliary information comprises a wake-up delay that the UE expects.

10. The method of any one of claims 1-6, further comprising:
receiving second auxiliary information sent by the UE, wherein the second auxiliary information comprises a wake-up delay range that the UE supports.

11. The method of any one of claims 1-6, further comprising:
sending configuration information to the UE, wherein the configuration information comprises an indication for allowing the UE to monitor a low power wake-up signal (LP WUS).

12. A method for receiving indication information, performed by a user equipment (UE), comprising:
receiving first indication information sent by a network device, wherein the fir st indication information is used to indicate a wake-up delay for the UE to switch from a sleep state to a working state; and
in a case of receiving a low power wake-up signal (LP WUS), switching from the sleep state to the working state within the wake-up delay according to the first indication information.

13. The method of claim 12, wherein receiving the first indication information sent by the network device, comprises:
receiving downlink control information (DCI) sent by the network device, wherein the DCI comprises the first indication information.

14. The method of claim 13, wherein switching from the sleep state to the working state within the wake-up delay according to the first indication information, comprises:
determining the wake-up delay according to values of M bits in a first information field of the DCI; and
switching from the sleep state to the working state within the wake-up delay.

15. The method of claim 13, further comprising:
determining a first moment after a first duration since receiving the DCI as a start moment for the wake-up delay indicated by the DCI to take effect.

16. The method of claim 15, further comprising:
determining a start moment for a wake-up delay indicated by an (N+1)^{th} DCI to take effect as an end moment for a wake-up delay indicated by an N^{th} DCI to take effect.

17. The method of claim 15, further comprising:
determining an end moment of the wake-up delay indicated by the DCI according to an effective duration.

18. The method of claim 17, wherein
the effective duration is defined by a protocol, or
the effective duration is determined according to second indication information sent by the network device, wherein the second indication information is used to indicate the effective duration of the wake-up delay corresponding to the DCI.

19. The method of claim 17, further comprising:
in a case of receiving a new LP WUS after the wake-up delay corresponding to the DCI becomes invalid, switching from the sleep state to the working state within a default wake-up delay.

20. The method of claim 19, further comprising:
receiving third indication information sent by the network device, wherein the third indication information is used to indicate the default wake-up delay.

21. The method of any one of claims 12-20, further comprising:
sending first auxiliary information to the network device, wherein the first auxiliary information comprises a wake-up delay that the UE expects.

22. The method of any one of claims 12-20, further comprising:
sending second auxiliary information to the network device, wherein the second auxiliary information comprises a wake-up delay range that the UE supports.

23. An apparatus for sending indication information, configured in a network device, comprising:
a transceiver module, configured to send first indication information to a user equipment (UE), wherein the first indication information is used to indicate a wake-up delay for the UE to switch from a sleep state to a working state.

24. An apparatus for receiving indication information, configured in a user equipment (UE), comprising:
a transceiver module, configured to receive first indication information sent by a network device, wherein the first indication information is used to indicate a wake-up delay for the UE to switch from a sleep state to a working state; and
a processing module, configured to, in a case of receiving a low power wake-up signal (LP WUS), switch from the sleep state to the working state within the wake-up delay according to the first indication information.

25. A communication apparatus, comprising a processor and a memory,
wherein the memory is configured to store a computer program, and
wherein the processor is configured to execute the computer program to implement the method of any one of claims 1-11.

26. A communication apparatus, comprising a processor and a memory,
wherein the memory is configured to store a computer program, and
wherein the processor is configured to execute the computer program to implement the method of any one of claims 12-22.

27. A computer-readable storage medium having an instruction stored thereon, wherein when a computer calls and executes the instruction, the computer is caused to implement the method of any one of claims 1-11.

28. A computer-readable storage medium having an instruction stored thereon, wherein when a computer calls and executes the instruction, the computer is caused to implement the method of any one of claims 12-22.
